# EUROPEAN PATENT APPLICATION

(11) **EP 4 697 772 A1**
(43) Date of publication of application: **18.02.2026**
(21) Application number: 24787951.3
(22) Date of filing: 02.04.2024
(51) Int. Cl.: H04W 12/043, H04W 12/069, H04L 9/40, H04W 12/108

(54) **SECURITY ENVIRONMENT IDENTITY VERIFICATION METHOD AND SYSTEM BASED ON WIRELESS SIGNAL**

(30) Priority: 11.04.2023 CN 202310387598
(71) Applicant: Alipay (Hangzhou) Information Technology Co., Ltd., Hangzhou, Zhejiang 310000 (CN)
(72) Inventor: XIA, Jun, Hangzhou, Zhejiang 310000 (CN)
(74) Representative: Winter, Brandl - Partnerschaft mbB
(86) International application number: PCT/CN2024/085535
(87) International publication number: WO 2024/212846

(57) **Abstract**

This specification provides wireless signal-based identity verification methods in a secure environment, which are applied to a client. The client is located in a network coverage area of a secure device, and the secure device is a wireless network access device. The method includes: obtaining service information in response to a service operation of a user, and connecting to the secure device; sending the service information to the secure device as raw data, so that the secure device signs the raw data by using a private key; receiving a signing result; and sending the signing result to a server, so that the server performs signature verification on the signing result by using a public key, and performs a service when the signature verification succeeds. This specification further provides a corresponding system. According to the methods in this specification, the secure device is installed at a specified location, and the secure device performs signing by using the private key of the secure device, so that when performing a service operation, a user needs to be connected to the secure device at the specified location for verification, and the user can be strictly required to be at the specified location, thereby implementing a secure and trusted network environment.

## Description

### TECHNICAL FIELD

This specification pertains to the data security field, and specifically relates to wireless signal-based identity verification methods and systems in a secure environment.

### BACKGROUND

As the trend of enterprise digitalization advances, increasingly more companies start to work online, and network security issues are becoming more and more prominent. For example, an Alipay account, a Weibo account, etc. of an enterprise are usually managed by some employees on behalf of the enterprise. This use way causes security risks while bringing convenience to the enterprise.

Specifically, when an account of an employee is lost or stolen, because the employee is an operator of an enterprise account, the employee can operate the enterprise account anywhere. This causes the enterprise account to be at risk. In addition, if an authorization relationship is not deleted in time after the employee leaves the enterprise, the employee can still operate the enterprise account by using his/her own account. As a result, the enterprise account is at risk.

Currently, to improve network security, external hardware Usbkey is usually used. The Usbkey is an external secure device that installs a digital certificate into a secure zone on a USB drive, and requires a user to write a certificate into a secure environment of the USB after purchasing the device. In subsequent service verification, the USB is inserted to sign the certificate to implement identity verification in a secure environment, that is, to identify or authenticate the user. Disadvantages of this method lie in the following: 1. This way cannot resolve an office place requirement, and employees can easily take away the Usbkey device. 2. This way can be used by only one user at a time, and a use way and use experience are poor.

In view of the above-mentioned situation, to improve security and use experience, a new identity verification method in a secure environment is needed.

### SUMMARY

This specification is intended to provide wireless signal-based identity verification methods and systems in a secure environment, to improve security and use experience.

To achieve the above-mentioned objective, this specification provides a wireless signal-based identity verification method in a secure environment, which is applied to a client. The client is located in a network coverage area of a secure device, and the secure device is a wireless network access device with a secure storage environment and a network coverage area. The identity verification method includes: obtaining service information in response to a service operation of a user, and establishing or maintaining a connection to the secure device; sending the service information to the secure device as raw data, so that the secure device signs the raw data by using a private key of the secure device; receiving a signing result from the secure device; and sending the signing result to a server, so that the server performs signature verification on the signing result by using a public key of the secure device, and performs a service based on the service information when a signature verification result is that the signature verification succeeds.

In some embodiments, establishing or maintaining the connection to the secure device specifically includes: pre-submitting the service information to query, from a service server, whether identity verification needs to be performed; and establishing or maintaining a connection to the secure device when a query result is that the identity verification needs to be performed.

In some embodiments, the client includes a service front-end and an identity verification SDK. Obtaining the service information specifically includes: obtaining the service information by using the service front-end. Establishing or maintaining the connection to the secure device specifically includes: invoking the identity verification SDK by using the service front-end, and establishing or maintaining a connection to the secure device by using the identity verification SDK. Sending the service information to the secure device as the raw data specifically includes: sending the service information to the secure device as the raw data by using the identity verification SDK. Sending the signing result to the server specifically includes: sending the signing result to the server by using the identity verification SDK.

In some embodiments, the server includes an identity verification server and a service server. Sending the signing result to the server, so that the server performs signature verification on the signing result by using a public key of the secure device, and performs a service based on the service information when a signature verification result is that the signature verification succeeds specifically includes: sending the signing result to the identity verification server, so that the identity verification server performs the signature verification on the signing result by using the public key of the secure device; receiving the signature verification result from the identity verification server; and submitting the service information to the service server when the received signature verification result is that the signature verification succeeds, so that the service server performs the service based on the service information.

In some embodiments, the signature verification result includes whether the signature verification succeeds and an identity verification number. Submitting the service information to the service server, so that the service server performs the service based on the service information specifically includes: submitting the service information and the identity verification number to the service server, so that the service server invokes the identity verification server, receives a secondary confirmation result from the identity verification server, and performs the service based on the service information when the secondary confirmation result is that the signature verification succeeds, where the secondary confirmation result is obtained by the identity verification server by performing, by using the identity verification number, secondary confirmation on whether the signature verification succeeds.

In some embodiments, after enabling the server to perform a service based on the service information, the method further includes: receiving a service execution result sent by the server after execution of the service is completed.

In some embodiments, the secure device is a wireless network access device with a secure storage environment and a network coverage area. The identity verification method includes: receiving raw data from a client, where the client is located in the network coverage area of the secure device and is connected to the secure device, and the raw data is service information obtained by the client in response to a service operation of a user; signing the raw data by using a private key of the secure device to obtain a signing result; and returning the signing result to the client, so that the client sends the signing result to a server, the server performs signature verification on the signing result by using a public key of the secure device, and the server performs a service based on the service information when a signature verification result is that the signature verification succeeds.

In some embodiments, before receiving the raw data from the client, the method further includes: in response to an activation operation of the user, storing the private key of the secure device by using the secure storage environment, and enabling the server to store the public key of the secure device.

In some embodiments, storing the private key of the secure device by using the secure storage environment, and enabling the server to store the public key of the secure device specifically includes: requesting the server to activate the device in response to the activation operation of the user, so that the server determines whether the secure device is activated, requests a certificate provider to issue a certificate of the secure device when the secure device is not activated, receives the private key, the public key, and the certificate of the secure device from the certificate provider, and stores the public key of the secure device, where the private key and the public key of the secure device are generated by the certificate provider, and the certificate of the secure device is created by the certificate provider based on the public key of the secure device; and receiving the private key and the certificate of the secure device that are sent by the server; or generating the private key and the public key of the secure device in response to the activation operation of the user; requesting the server to activate the device, so that the server determines whether the secure device is activated, and when the secure device is not activated, requests a certificate provider to issue a certificate of the secure device and send the public key of the secure device, receives the certificate of the secure device from the certificate provider, and stores the public key of the secure device, where the certificate of the secure device is created by the certificate provider based on the public key of the secure device; and receiving the certificate of the secure device that is sent by the server.

In some embodiments, the server includes an identity verification server and a service server. That the client sends the signing result to a server, the server performs signature verification on the signing result by using a public key of the secure device, and the server performs a service based on the service information when a signature verification result is that the signature verification succeeds specifically includes: sending, by the client, the signing result to the identity verification server, so that the identity verification server performs the signature verification on the signing result by using the public key of the secure device to obtain the signature verification result; receiving, by the client, the signature verification result from the identity verification server; and submitting, by the client, the service information to the service server when the received signature verification result is that the signature verification succeeds, so that the service server performs the service based on the service information.

In some embodiments, the signature verification result includes whether the signature verification succeeds and an identity verification number. Submitting the service information to the service server, so that the service server performs the service based on the service information specifically includes: submitting the service information and the identity verification number to the service server, so that the service server invokes the identity verification server, receives a secondary confirmation result from the identity verification server, and performs the service based on the service information when the secondary confirmation result is that the signature verification succeeds, where the secondary confirmation result is obtained by the identity verification server by performing, by using the identity verification number, secondary confirmation on whether the signature verification succeeds.

According to another aspect, this specification provides a wireless signal-based identity verification system in a secure environment, including: a secure device, where the secure device is a wireless network access device with a secure storage environment and a network coverage area, and is configured to: receive raw data, sign the raw data by using a private key of the secure device to obtain a signing result, and send the signing result; a client, where the client is located in the network coverage area of the secure device, and is configured to: obtain service information in response to a service operation of a user, and establish or maintain a connection to the secure device; send the service information to the secure device as the raw data; receive the signing result from the secure device; and send the signing result; and a server, where the server is configured to: receive the signing result from the client, perform signature verification on the signing result by using a public key of the secure device to obtain a signature verification result, and perform a service based on the service information when the signature verification result is that the signature verification succeeds.

In some embodiments, establishing or maintaining the connection to the secure device specifically includes: pre-submitting the service information to query, from a service server, whether identity verification needs to be performed; and establishing or maintaining a connection to the secure device when a query result is that the identity verification needs to be performed.

In some embodiments, the client includes a service front-end and an identity verification SDK. Obtaining the service information specifically includes: obtaining the service information by using the service front-end. Establishing or maintaining the connection to the secure device specifically includes: invoking the identity verification SDK by using the service front-end, and establishing or maintaining a connection to the secure device by using the identity verification SDK. Sending the service information to the secure device as the raw data specifically includes: sending the service information to the secure device as the raw data by using the identity verification SDK. Sending the signing result specifically includes: sending the signing result by using the identity verification SDK. Receiving the signature verification result includes: receiving the signature verification result by using the identity verification SDK, and receiving, by using the service front-end, the signature verification result notified by the identity verification SDK through a callback.

In some embodiments, the client is further configured to: receive the signature verification result, and submit the service information when the received signature verification result is that the signature verification succeeds. The server includes: an identity verification server, where the identity verification server is configured to: receive the signing result from the client, perform the signature verification on the signing result by using the public key of the secure device to obtain the signature verification result, and send the signature verification result to the client; and a service server, where the service server is configured to: receive the service information submitted by the client, and perform the service based on the service information.

In some embodiments, the signature verification result includes whether the signature verification succeeds and an identity verification number. Receiving the service information submitted by the client, and performing the service based on the service information specifically includes: receiving the service information and the identity verification number, invoking the identity verification server, receiving a secondary confirmation result from the identity verification server, and performing the service based on the service information when the secondary confirmation result is that the signature verification succeeds. The identity verification server is further configured to perform, by using the identity verification number, secondary confirmation on whether the signature verification succeeds to obtain the secondary confirmation result.

In some embodiments, the secure device is further configured to: before receiving the raw data from the client, in response to an activation operation of the user, store the private key of the secure device by using the secure storage environment, and enable the server to store the public key of the secure device.

In some embodiments, the wireless signal-based identity verification system in a secure environment further includes a certificate provider. The certificate provider is configured to: generate the private key and the public key of the secure device, and create a certificate of the secure device based on the public key of the secure device. The secure device is specifically configured to: request the server to activate the device in response to the activation operation of the user, so that the server determines whether the secure device is activated, requests the certificate provider to issue the certificate of the secure device when the secure device is not activated, receives the private key, the public key, and the certificate of the secure device from the certificate provider, and stores the public key of the secure device; and receive the private key and the certificate of the secure device that are sent by the server. Alternatively, the certificate provider is configured to create a certificate of the secure device based on the public key of the secure device. The secure device is specifically configured to: generate the private key and the public key of the secure device in response to the activation operation of the user; request the server to activate the device, so that the server determines whether the secure device is activated, and when the secure device is not activated, requests the certificate provider to issue the certificate of the secure device and send the public key of the secure device, receives the certificate of the secure device from the certificate provider, and stores the public key of the secure device; and receive the certificate of the secure device that is sent by the server.

According to another aspect, this specification provides a computer-readable storage medium. The computer-readable storage medium stores a computer program. When the computer program is executed in a computer, the computer is enabled to serve as a client to perform the method described above.

According to another aspect, this specification provides a computing device, including a memory and a processor. The memory stores executable code, and the processor executes the executable code to perform the method described above.

According to the wireless signal-based identity verification methods in a secure environment in this specification, the secure device is installed at a specified location, and the secure device performs signing by using the private key of the secure device, so that when performing a service operation, a user needs to be connected to the secure device at the specified location for verification, and the user can be strictly required to be at the specified location, thereby implementing a secure and trusted network environment.

According to the wireless signal-based identity verification methods in a secure environment in this specification, a plurality of client devices (such as a mobile phone, a notebook computer, a pad, a desktop computer, or another device installed with a Bluetooth or wifi apparatus) that can find a wireless signal of the secure device in a same office environment can be simultaneously connected to the secure device for signing, and after one connection, all subsequent service operations can be automatically connected and signed through unaware authentication, to implement unaware identity verification.

### BRIEF DESCRIPTION OF DRAWINGS

FIG. 1 is a diagram illustrating a time sequence of activating a secure device in a wireless signal-based identity verification method in a secure environment, according to a first embodiment of this specification;
FIG. 2 is a diagram illustrating a time sequence of performing verification by using a secure device in a wireless signal-based identity verification method in a secure environment, according to a first embodiment of this specification;
FIG. 3 is a flowchart illustrating a wireless signal-based identity verification method in a secure environment, according to a second embodiment of this specification; and
FIG. 4 is a flowchart illustrating a wireless signal-based identity verification method in a secure environment, according to a third embodiment of this specification.

### DESCRIPTION OF EMBODIMENTS

The following further describes this specification with reference to specific embodiments. It should be understood that the following embodiments are merely used to describe this specification and are not intended to limit the scope of this specification.

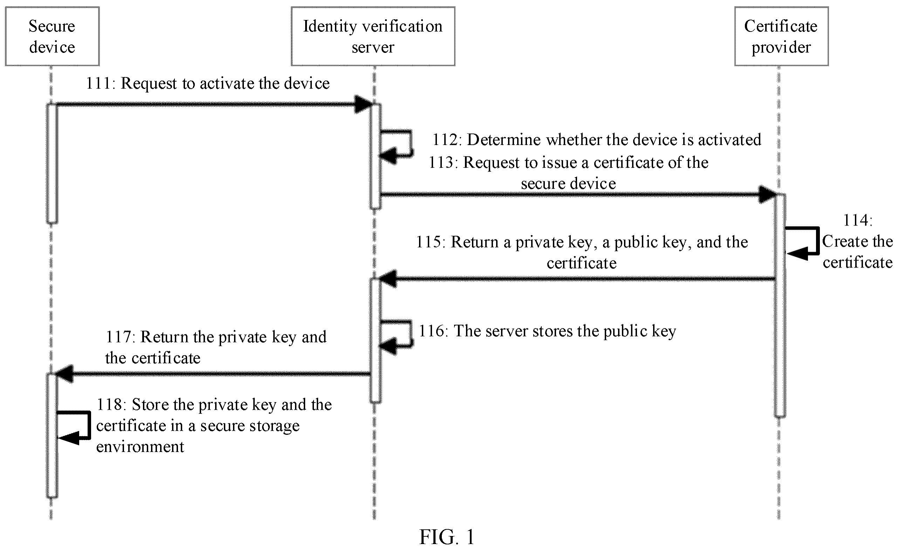

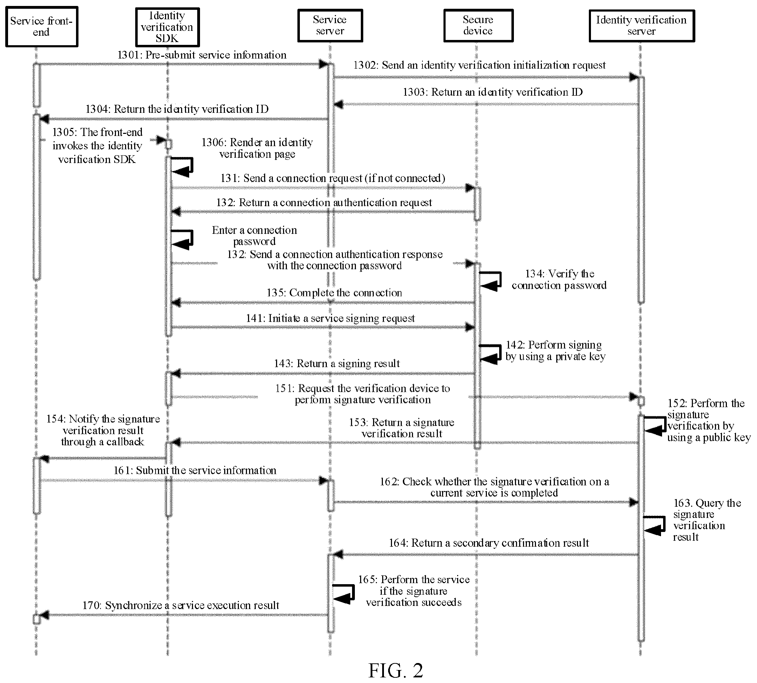

As shown in FIG. 1 and FIG. 2, a wireless signal-based identity verification method in a secure environment according to a first embodiment of this specification mainly includes step 100 to step 170.

Step 100: Install a secure device in a place (for example, an office of an enterprise) that requires a secure environment, where the secure device is a wireless network access device with a secure storage environment, and therefore has a network coverage area, so that the secure device can protect security of a private key and a certificate by using the secure storage environment of the secure device.

The wireless network access device is a Bluetooth or router device.

Step 110: Store the private key of the secure device in the secure storage environment of the secure device, and store a public key of the secure device on an identity verification server, where a certificate provider generates the certificate of the secure device in response to an activation operation performed by a user on the secure device, and the private key and the certificate of the secure device are stored in the secure storage environment of the secure device, and the public key of the secure device is stored on the identity verification server.

In this embodiment, step 110 specifically includes the following steps: 111: In response to the activation operation performed by the user on the secure device, the secure device requests the identity verification server to activate the device. 112: The identity verification server determines whether the secure device is activated; and if yes, ends the procedure of the wireless signal-based identity verification method in a secure environment because the activated secure device cannot be repeatedly activated; or if no, continues to perform step 113. 113: The identity verification server requests the certificate provider to issue the certificate of the secure device. 114: In response to the issuing request, the certificate provider generates the private key and the public key of the secure device, and creates the certificate of the secure device based on the public key of the secure device. 115: The certificate provider sends the private key, the public key, and the certificate of the secure device to the identity verification server. 116: The identity verification server stores the public key of the secure device. 117: The identity verification server sends the private key and the certificate of the secure device to the secure device.

Therefore, a certificate issuing procedure is completed by using the above-mentioned step 114 to step 117.

118: The secure device stores the private key and the certificate of the secure device in the secure storage environment of the secure device.

Therefore, an activation procedure is completed.

In another embodiment, step 110 specifically includes the following steps: 111': In response to the activation operation performed by the user on the secure device, the secure device generates the private key and the public key of the secure device, and then requests the identity verification server to activate the device and sends the public key of the secure device to the identity verification server. 112': The identity verification server determines whether the secure device is activated; and if yes, ends the procedure of the wireless signal-based identity verification method in a secure environment because the activated secure device cannot be repeatedly activated; or if no, continues to perform step 113'. 113': The identity verification server requests the certificate provider to issue the certificate of the secure device, and sends the public key of the secure device to the certificate provider. 114'. In response to the issuing request, the certificate provider creates the certificate of the secure device based on the public key of the secure device. 115': The certificate provider sends the certificate of the secure device to the identity verification server. 116': The identity verification server stores the public key of the secure device, and then sends the certificate of the secure device to the secure device. In some embodiments, after the identity verification server stores the public key of the secure device, the method further includes storing the certificate of the secure device.

Therefore, a certificate issuing procedure is completed by using the above-mentioned step 114' to step 116'.

117': The secure device stores the private key and the certificate of the secure device in the secure storage environment of the secure device.

Therefore, an activation procedure is completed. During activation, the secure device applies for the certificate of the secure device to the identity verification server (such as an Alipay server), and installs the private key and the certificate into the secure storage environment of the secure device, to implement certificate protection.

120: Provide a client located in the network coverage area of the secure device, where the client includes a service front-end and an identity verification SDK. 130. The service front-end of the client obtains service information in response to a service operation performed by the user on the client, and establishes or maintains a connection to the secure device, where that the client establishes or maintains a connection to the secure device specifically includes: determining whether a connection is established to the secure device; and if a connection is established to the secure device, maintaining the connection to the secure device; or if no connection is established to the secure device, establishing a connection to the secure device through unaware authentication; and establishing or maintaining the connection to the secure device specifically includes: invoking the identity verification SDK by using the service front-end, and establishing or maintaining a connection to the secure device by using the identity verification SDK.

A specific method of connecting the client to the secure device through unaware authentication is similar to a current method of connecting a mobile phone to a wireless network. To be specific, a user front-end needs to be authenticated in only an initial connection, and a connection password does not need to be entered for authentication in a subsequent connection.

Establishing the connection between the client and the secure device through unaware authentication specifically includes the following steps: 131: The identity verification SDK of the client sends a connection request to the secure device. 132: The secure device returns a connection authentication request to the identity verification SDK of the client. 133: If the identity verification SDK of the client stores a connection password, the identity verification SDK sends a connection authentication response with the connection password to the secure device; or otherwise, in response to a connection password entered by the user, the identity verification SDK stores the connection password, and sends a connection authentication response with the connection password to the secure device. 134: The secure device verifies the connection password. 135: When the verification succeeds, the client completes the connection to the secure device, and the secure device sends, to the identity verification SDK, a result indicating that the client completes the connection to the secure device.

That the client establishes or maintains a connection to the secure device specifically includes: The client pre-submits the service information to query, from a service server, whether identity verification needs to be performed, and waits for receiving a query result. When the query result is that the identity verification needs to be performed, the client establishes or maintains a connection to the secure device. In this embodiment, the query result indicating that the identity verification needs to be performed is represented by an identity verification ID, and the identity verification ID is obtained by the service server from the identity verification server when the identity verification needs to be performed. The identity verification ID is used by the client to invoke the identity verification SDK to initiate an identity verification process. Specifically, the client invokes a rendering interface of the identity verification SDK by using the identity verification ID to render an identity verification page.

Therefore, that the client establishes or maintains a connection to the secure device specifically includes the following steps: 1301: The service front-end of the client pre-submits the service information to the service server to query whether the identity verification needs to be performed, so that the service server determines, based on the service information, whether the identity verification needs to be performed. 1302: When the identity verification needs to be performed, the service server sends an identity verification initialization request to the identity verification server. 1303: The identity verification server returns the identity verification ID to the service server in response to the identity verification initialization request, where the identity verification ID represents the query result indicating that the identity verification needs to be performed. 1304: The service server sends, to the client, the query result indicating that the identity verification needs to be performed. 1305: Invoke the identity verification SDK by using the service front-end of the client and the identity verification ID when the query result is that the identity verification needs to be performed.

1306: Render the identity verification page by using the invoked identity verification SDK.

140: The identity verification SDK of the client sends the service information to the secure device as raw data, and the secure device signs the raw data by using the private key of the secure device, and returns a signing result to the identity verification SDK of the client.

In this embodiment, the raw data is the service information obtained by the client in response to the service operation of the user, for example, content or submission time of a service.

Step 140 specifically includes the following steps: 141: The identity verification SDK of the client sends the raw data to the secure device to initiate a service signing request. 142: The secure device signs the raw data and a secure device ID by using the private key of the secure device to obtain a signing result, where the signing result includes the secure device ID because the raw data and the secure device ID are signed.

143: The secure device returns the signing result to the identity verification SDK of the client.

150: The identity verification SDK of the client sends the signing result to the identity verification server, and the identity verification server performs signature verification on the signing result by using the public key of the secure device, and returns a signature verification result to the identity verification SDK of the client, so that the identity verification SDK notifies the service front-end of the client of the signature verification result through a callback, where the signature verification result includes whether the signature verification succeeds and an identity verification number (verifyId).

When the signature verification succeeds, it indicates that identity verification of a service succeeds, and the service is operated in a secure environment. Otherwise, it indicates that the service is attacked.

Step 150 specifically includes the following steps: 151: The identity verification SDK of the client sends the signing result to the identity verification server to request the verification device to perform the signature verification. 152: The identity verification server retrieves the public key of the secure device by using the secure device ID in the signing result, and performs the signature verification on the signing result by using the public key of the secure device to obtain the signature verification result. 153: The identity verification server returns the signature verification result to the identity verification SDK of the client. 154: The identity verification SDK of the client notifies the service front-end of the client of the signature verification result through a callback.

160: The service front-end of the client submits the service information to the service server when the signature verification result received by the service front-end of the client is that the signature verification succeeds, and the service server performs a service based on the service information.

That the service front-end of the client submits the service information to the service server, and the service server performs a service based on the service information specifically includes the following: The service front-end of the client submits the service information and the identity verification number (verifyId) to the service server, and the service server invokes the identity verification server. The identity verification server performs, by using the identity verification number, secondary confirmation on whether the signature verification succeeds, and sends a secondary confirmation result to the service server. The service server performs the service based on the service information when the secondary confirmation result is that the signature verifications succeeds; or otherwise, rejects the service.

Therefore, secondary confirmation of the signature verification result is implemented.

Correspondingly, step 160 specifically includes the following steps: 161: When the signature verification result received by the client is that the signature verification succeeds, the client submits the service information and the identity verification number (verifyId) to the service server. 162: The service server sends the identity verification number to the identity verification server to request to check whether the signature verification on the current service is completed. 163: The identity verification server queries the signature verification result by using the identity verification number. 164: The identity verification server returns the secondary confirmation result to the service server. 165: The service server performs the service based on the service information when the secondary confirmation result is that the signature verification succeeds; or otherwise, rejects the service.

170 (optional): The service server synchronizes a service execution result to the client after execution of the service is completed.

According to the wireless signal-based identity verification methods in a secure environment in this specification, the secure device is installed at a specified location, and the secure device performs signing by using the private key of the secure device, so that when performing a service operation, a user needs to be connected to the secure device at the specified location for verification, and the user can be strictly required to be at the specified location, thereby implementing a secure and trusted environment.

According to the wireless signal-based identity verification methods in a secure environment in this specification, a plurality of client devices (such as a mobile phone, a notebook computer, a pad, a desktop computer, or another device installed with a Bluetooth or wifi apparatus) that can find a wireless signal of the secure device in a same office environment can be simultaneously connected to the secure device for signing, and after one connection, all subsequent service operations can be automatically connected and signed through unaware authentication, to implement unaware identity verification.

A wireless signal-based identity verification method in a secure environment according to a second embodiment of this specification is applied to a client. The client is located in a network coverage area of a secure device, and the secure device is a wireless network access device with a secure storage environment and a network coverage area.

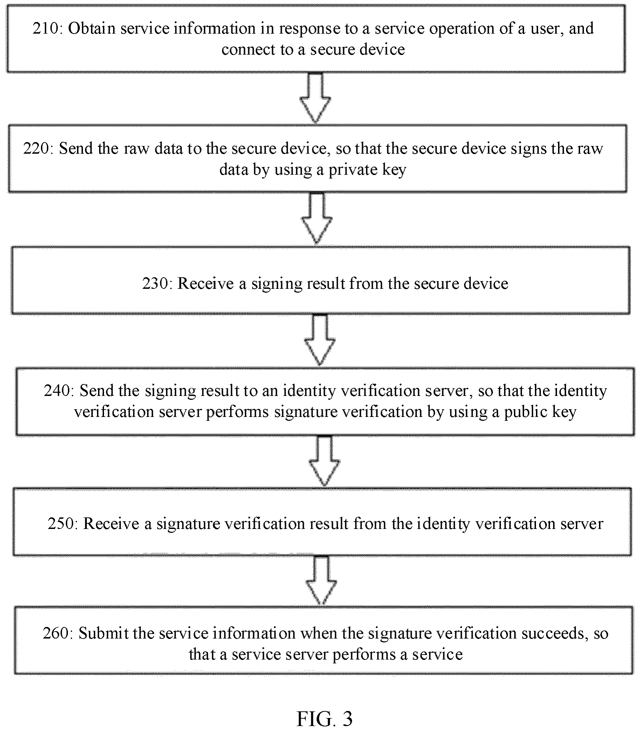

As shown in FIG. 3, the wireless signal-based identity verification method in a secure environment is applied to the client, and specifically includes the following steps: 210: Obtain service information in response to a service operation of a user, and establish or maintain a connection to the secure device, where establishing or maintaining the connection to the secure device specifically includes: determining whether a connection is established to the secure device; and if a connection is established to the secure device, maintaining the connection to the secure device; or if no connection is established to the secure device, establishing a connection to the secure device through unaware authentication.

Establishing or maintaining the connection to the secure device specifically includes: pre-submitting service information to query, from a service server, whether identity verification needs to be performed; and establishing or maintaining a connection to the secure device when a query result is that the identity verification needs to be performed.

The client includes a service front-end and an identity verification SDK.

In this embodiment, the query result indicating that the identity verification needs to be performed is represented by an identity verification ID, and the identity verification ID is obtained by the service server from an identity verification server when the identity verification needs to be performed. The identity verification ID is used by the client to invoke the identity verification SDK to initiate an identity verification process. Specifically, the client invokes a rendering interface of the identity verification SDK by using the identity verification ID to render an identity verification page.

Obtaining the service information specifically includes: obtaining the service information by using the service front-end.

Establishing or maintaining the connection to the secure device specifically includes: invoking the identity verification SDK by using the service front-end, and establishing or maintaining a connection to the secure device by using the identity verification SDK.

220: Send the service information to the secure device as raw data, so that the secure device signs the raw data by using a private key of the secure device, where sending the service information to the secure device as the raw data specifically includes: sending the service information to the secure device as the raw data by using the identity verification SDK.

230: Receive a signing result from the secure device. 240: Send the signing result to the identity verification server, so that the identity verification server performs signature verification on the signing result by using a public key of the secure device to obtain a signature verification result, where the signing result includes a secure device ID, and the identity verification server retrieves the public key of the secure device by using the secure device ID in the signing result.

Sending the signing result to the identity verification server specifically includes: sending the signing result to the identity verification server by using the identity verification SDK.

250: Receive the signature verification result from the identity verification server, where receiving the signature verification result from the identity verification server specifically includes: receiving the signature verification result from the identity verification server by using the identity verification SDK, and receiving, by using the service front-end, the signature verification result notified by the identity verification SDK through a callback.

260: Submit the service information to the service server when the received signature verification result is that the signature verification succeeds, so that the service server performs a service based on the service information.

The signature verification result described above includes whether the signature verification succeeds and an identity verification number. Correspondingly, submitting the service information to the service server, so that the service server performs a service based on the service information specifically includes the following steps: 261: Submit the service information and the identity verification number to the service server, so that the service server invokes the identity verification server, receives a secondary confirmation result from the identity verification server, and performs the service based on the service information when the secondary confirmation result is that the signature verification succeeds, where the secondary confirmation result is obtained by the identity verification server by performing, by using the identity verification number, secondary confirmation on whether the signature verification succeeds.

262: After the service information is sent to the service server, so that the service server performs the service based on the service information, the method further includes: receiving a service execution result sent by the service server after execution of the service is completed.

In some embodiments, a same server can be used to serve as both the service server and the identity verification server. Therefore, step 240 to step 260 can be replaced with the following: sending the signing result to the server, so that the server performs signature verification on the signing result by using a public key of the secure device, and performs a service based on the service information when a signature verification result is that the signature verification succeeds.

A wireless signal-based identity verification method in a secure environment according to a third embodiment of this specification is applied to a secure device. The secure device is a wireless network access device with a secure storage environment and a network coverage area.

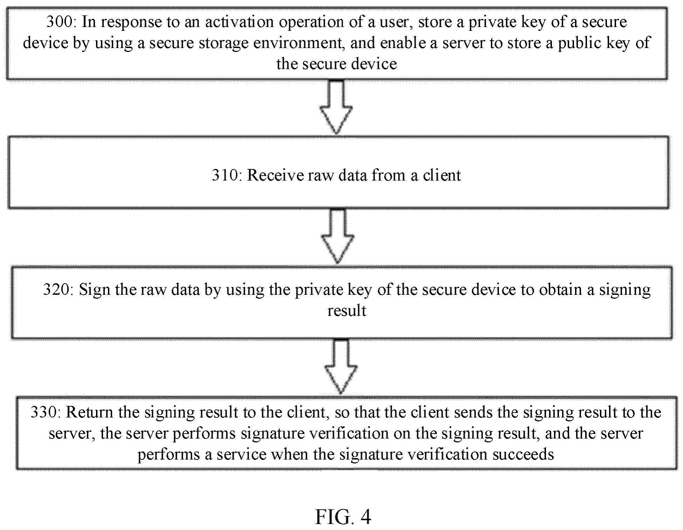

As shown in FIG. 4, the wireless signal-based identity verification method in a secure environment is applied to the secure device, and specifically includes step 300 to step 330.

300: In response to an activation operation of a user, store a private key of the secure device by using the secure storage environment, and enable a server to store a public key of the secure device, where the storing a private key of the secure device by using the secure storage environment, and enabling a server to store a public key of the secure device specifically includes the following steps: 301: Request the server to activate the device in response to the activation operation of the user, so that the server determines whether the secure device is activated, requests a certificate provider to issue a certificate of the secure device when the secure device is not activated, receives the private key, the public key, and the certificate of the secure device from the certificate provider, and stores the public key of the secure device, where the private key and the public key of the secure device are generated by the certificate provider, and the certificate of the secure device is created by the certificate provider based on the public key of the secure device. 302: Receive the private key and the certificate of the secure device that are sent by the server. Alternatively, the following steps are included: 301': Generate a private key and a public key of the secure device in response to the activation operation of the user, and request the server to activate the device, so that the server determines whether the secure device is activated, and when the secure device is not activated, requests the certificate provider to issue a certificate of the secure device and send the public key of the secure device, receives the certificate of the secure device from the certificate provider, and stores the public key of the secure device, where the certificate of the secure device is created by the certificate provider based on the public key of the secure device. 302': Receive the certificate of the secure device that is sent by the server.

310: Receive raw data from a client, where the client is located in the network coverage area of the secure device and is connected to the secure device, and the raw data is service information obtained by the client in response to a service operation of the user. Specifically, the client determines whether the client is connected to the secure device; and if the client is connected to the secure device, maintains the connection to the secure device; or if the client is not connected to the secure device, establishes a connection to the secure device through unaware authentication to be connected to the secure device.

320: Sign the raw data by using the private key of the secure device to obtain a signing result, where the signing the raw data by using the private key of the secure device specifically includes: signing the raw data and a secure device ID by using the private key of the secure device, so that the signing result includes the secure device ID.

330: Return the signing result to the client, so that the client sends the signing result to the server, the server performs signature verification on the signing result by using the public key of the secure device, and the server performs a service based on the service information when a signature verification result is that the signature verification succeeds.

An identity verification server retrieves the public key of the secure device by using the secure device ID in the signing result.

In this embodiment, the server includes the identity verification server and a service server, and the identity verification server stores the public key of the secure device.

Correspondingly, that the client sends the signing result to the server, the server performs signature verification on the signing result by using the public key of the secure device, and the server performs a service based on the service information when a signature verification result is that the signature verification succeeds specifically includes: 331: The client sends the signing result to the identity verification server, so that the identity verification server performs the signature verification on the signing result by using the public key of the secure device to obtain the signature verification result. 332: The client receives the signature verification result from the identity verification server. 333: The client submits the service information to the service server when the received signature verification result is that the signature verification succeeds, so that the service server performs the service based on the service information.

The signature verification result includes whether the signature verification succeeds and an identity verification number. Submitting the service information to the service server, so that the service server performs the service based on the service information specifically includes: submitting the service information and the identity verification number to the service server, so that the service server invokes the identity verification server, receives a secondary confirmation result from the identity verification server, and performs the service based on the service information when the secondary confirmation result is that the signature verification succeeds, where the secondary confirmation result is obtained by the identity verification server by performing, by using the identity verification number, secondary confirmation on whether the signature verification succeeds.

Referring to FIG. 1 and FIG. 2, a wireless signal-based identity verification system in a secure environment according to a fourth embodiment of this specification includes: a secure device, where the secure device is a wireless network access device with a secure storage environment and a network coverage area, and is configured to: receive raw data, sign the raw data by using a private key of the secure device to obtain a signing result, and send the signing result; a client, where the client is located in the network coverage area of the secure device, and is configured to: obtain service information in response to a service operation of a user, and establish or maintain a connection to the secure device; send the service information to the secure device as the raw data; receive the signing result from the secure device; and send the signing result; and a server, where the server is configured to: receive the signing result from the client, perform signature verification on the signing result by using a public key of the secure device to obtain a signature verification result, and perform a service based on the service information when the signature verification result is that the signature verification succeeds.

Establishing or maintaining the connection to the secure device specifically includes: pre-submitting service information to query, from a service server, whether identity verification needs to be performed; and establishing or maintaining a connection to the secure device when a query result is that the identity verification needs to be performed.

Establishing or maintaining the connection to the secure device specifically includes: determining whether a connection is established to the secure device; and if a connection is established to the secure device, maintaining the connection to the secure device; or if no connection is established to the secure device, establishing a connection to the secure device through unaware authentication.

The signing the raw data by using a private key of the secure device specifically includes: signing the raw data and a secure device ID by using the private key of the secure device, so that the signing result includes the secure device ID. In addition, the identity verification server is further configured to retrieve the public key of the secure device by using the secure device ID in the signing result.

The client includes a service front-end and an identity verification SDK. Correspondingly, obtaining the service information specifically includes: obtaining the service information by using the service front-end. Establishing or maintaining the connection to the secure device specifically includes: invoking the identity verification SDK by using the service front-end, and establishing or maintaining a connection to the secure device by using the identity verification SDK. Sending the service information to the secure device as the raw data specifically includes: sending the service information to the secure device as the raw data by using the identity verification SDK. Sending the signing result specifically includes: sending the signing result by using the identity verification SDK. Receiving the signature verification result includes: receiving the signature verification result by using the identity verification SDK, and receiving, by using the service front-end, the signature verification result notified by the identity verification SDK through a callback.

The server includes an identity verification server and a service server. Correspondingly, the client is further configured to: receive the signature verification result, and submit the service information when the received verification result is that the signature verification succeeds. The identity verification server is configured to: receive the signing result from the client, perform the signature verification on the signing result by using the public key of the secure device to obtain the signature verification result, and send the signature verification result to the client. The service server is configured to: receive the service information submitted by the client, and perform the service based on the service information.

The signature verification result includes whether the signature verification succeeds and an identity verification number. Correspondingly, receiving the service information submitted by the client, and performing the service based on the service information specifically includes: receiving the service information and the identity verification number, invoking the identity verification server, receiving a secondary confirmation result from the identity verification server, and performing the service based on the service information when the secondary confirmation result is that the signature verification succeeds. The identity verification server is further configured to perform, by using the identity verification number, secondary confirmation on whether the signature verification succeeds to obtain the secondary confirmation result.

The wireless signal-based identity verification system in a secure environment further includes a certificate provider.

In this embodiment, the certificate provider is configured to: generate the private key and the public key of the secure device, and create a certificate of the secure device based on the public key of the secure device. Correspondingly, the secure device is specifically configured to: request the identity verification server to activate the device in response to an activation operation of the user, so that the identity verification server determines whether the secure device is activated, requests the certificate provider to issue the certificate of the secure device when the secure device is not activated, receives the private key, the public key, and the certificate of the secure device from the certificate provider, and stores the public key of the secure device; and receive the private key and the certificate of the secure device that are sent by the identity verification server.

In another embodiment, the certificate provider is configured to create a certificate of the secure device based on the public key of the secure device. Correspondingly, the secure device is specifically configured to: generate the private key and the public key of the secure device in response to an activation operation of the user; request the identity verification server to activate the device, so that the identity verification server determines whether the secure device is activated, and when the secure device is not activated, requests the certificate provider to issue the certificate of the secure device and send the public key of the secure device, receives the certificate of the secure device from the certificate provider, and stores the public key of the secure device; and receive the certificate of the secure device that is sent by the identity verification server.

A fifth embodiment of this specification provides a computer-readable storage medium. The computer-readable storage medium stores a computer program, and when the computer program is executed in a computer, the computer is enabled to serve as a client to perform the steps performed in the above-mentioned second embodiment of this specification. Because the steps performed by the computer are the same as those performed by the client described above, details are omitted here for simplicity.

A sixth embodiment of this specification provides a computing device, including a memory and a processor. The memory stores executable code, and when the processor executes the executable code, the processor serves as a client to perform the steps in the above-mentioned second embodiment of this specification. Because the steps performed by the processor are the same as those performed by the client described above, details are omitted here for simplicity.

The above-mentioned descriptions are merely some embodiments of this specification, and are not intended to limit the scope of this specification. Various variations still can be made to the above-mentioned embodiments of this specification. All simple and equivalent variations and modifications made according to the content of the claims and the specification of this specification fall within the protection scope of the claims of this specification. All those not described in detail in this specification are conventional technical content.

## Claims

1. A wireless signal-based identity verification method in a secure environment, applied to a client, wherein the client is located in a network coverage area of a secure device, the secure device is a wireless network access device with a secure storage environment and a network coverage area, and the identity verification method comprises:
obtaining service information in response to a service operation of a user, and establishing or maintaining a connection to the secure device;
sending the service information to the secure device as raw data, so that the secure device signs the raw data by using a private key of the secure device;
receiving a signing result from the secure device; and
sending the signing result to a server, so that the server performs signature verification on the signing result by using a public key of the secure device, and performs a service based on the service information when a signature verification result is that the signature verification succeeds.

2. The wireless signal-based identity verification method in a secure environment according to claim 1, wherein establishing or maintaining the connection to the secure device comprises: pre-submitting the service information to query, from a service server, whether identity verification needs to be performed; and establishing or maintaining a connection to the secure device when a query result is that the identity verification needs to be performed.

3. The wireless signal-based identity verification method in a secure environment according to claim 1, wherein the client comprises a service front-end and an identity verification SDK;
obtaining the service information comprises: obtaining the service information by using the service front-end;
establishing or maintaining the connection to the secure device comprises: invoking the identity verification SDK by using the service front-end, and establishing or maintaining a connection to the secure device by using the identity verification SDK;
sending the service information to the secure device as the raw data comprises: sending the service information to the secure device as the raw data by using the identity verification SDK; and
sending the signing result to the server comprises: sending the signing result to the server by using the identity verification SDK.

4. The wireless signal-based identity verification method in a secure environment according to claim 1, wherein the server comprises an identity verification server and a service server; and
sending the signing result to the server, so that the server performs signature verification on the signing result by using a public key of the secure device, and performs a service based on the service information when a signature verification result is that the signature verification succeeds comprises:
sending the signing result to the identity verification server, so that the identity verification server performs the signature verification on the signing result by using the public key of the secure device;
receiving the signature verification result from the identity verification server; and
submitting the service information to the service server when the received signature verification result is that the signature verification succeeds, so that the service server performs the service based on the service information.

5. The wireless signal-based identity verification method in a secure environment according to claim 4, wherein the signature verification result comprises whether the signature verification succeeds and an identity verification number; and
submitting the service information to the service server, so that the service server performs the service based on the service information comprises:
submitting the service information and the identity verification number to the service server, so that the service server invokes the identity verification server, receives a secondary confirmation result from the identity verification server, and performs the service based on the service information when the secondary confirmation result is that the signature verification succeeds, wherein the secondary confirmation result is obtained by the identity verification server by performing, by using the identity verification number, secondary confirmation on whether the signature verification succeeds.

6. The wireless signal-based identity verification method in a secure environment according to claim 1, after enabling the server to perform the service based on the service information, further comprising:
receiving a service execution result sent by the server after execution of the service is completed.

7. A wireless signal-based identity verification method in a secure environment, applied to a secure device, wherein the secure device is a wireless network access device with a secure storage environment and a network coverage area, and the identity verification method comprises:
receiving raw data from a client, wherein the client is located in the network coverage area of the secure device and is connected to the secure device, and the raw data is service information obtained by the client in response to a service operation of a user;
signing the raw data by using a private key of the secure device to obtain a signing result; and
returning the signing result to the client, so that the client sends the signing result to a server, the server performs signature verification on the signing result by using a public key of the secure device, and the server performs a service based on the service information when a signature verification result is that the signature verification succeeds.

8. The wireless signal-based identity verification method in a secure environment according to claim 7, before receiving the raw data from the client, further comprising: in response to an activation operation of the user, storing the private key of the secure device by using the secure storage environment, and enabling the server to store the public key of the secure device.

9. The wireless signal-based identity verification method in a secure environment according to claim 8, wherein storing the private key of the secure device by using the secure storage environment, and enabling the server to store the public key of the secure device comprises:
requesting the server to activate the device in response to the activation operation of the user, so that the server determines whether the secure device is activated, requests a certificate provider to issue a certificate of the secure device when the secure device is not activated, receives the private key, the public key, and the certificate of the secure device from the certificate provider, and stores the public key of the secure device, wherein the private key and the public key of the secure device are generated by the certificate provider, and the certificate of the secure device is created by the certificate provider based on the public key of the secure device; and
receiving the private key and the certificate of the secure device that are sent by the server; or
generating the private key and the public key of the secure device in response to the activation operation of the user;
requesting the server to activate the device, so that the server determines whether the secure device is activated, and when the secure device is not activated, requests a certificate provider to issue a certificate of the secure device and send the public key of the secure device, receives the certificate of the secure device from the certificate provider, and stores the public key of the secure device, wherein the certificate of the secure device is created by the certificate provider based on the public key of the secure device; and
receiving the certificate of the secure device that is sent by the server.

10. The wireless signal-based identity verification method in a secure environment according to claim 7, wherein the server comprises an identity verification server and a service server; and
that the client sends the signing result to a server, the server performs signature verification on the signing result by using a public key of the secure device, and the server performs a service based on the service information when a signature verification result is that the signature verification succeeds comprises:
sending, by the client, the signing result to the identity verification server, so that the identity verification server performs the signature verification on the signing result by using the public key of the secure device to obtain the signature verification result;
receiving, by the client, the signature verification result from the identity verification server; and
submitting, by the client, the service information to the service server when the received signature verification result is that the signature verification succeeds, so that the service server performs the service based on the service information.

11. The wireless signal-based identity verification method in a secure environment according to claim 10, wherein the signature verification result comprises whether the signature verification succeeds and an identity verification number; and
submitting the service information to the service server, so that the service server performs the service based on the service information comprises: submitting the service information and the identity verification number to the service server, so that the service server invokes the identity verification server, receives a secondary confirmation result from the identity verification server, and performs the service based on the service information when the secondary confirmation result is that the signature verification succeeds, wherein the secondary confirmation result is obtained by the identity verification server by performing, by using the identity verification number, secondary confirmation on whether the signature verification succeeds.

12. A wireless signal-based identity verification system in a secure environment, comprising:
a secure device, wherein the secure device is a wireless network access device with a secure storage environment and a network coverage area, and is configured to: receive raw data, sign the raw data by using a private key of the secure device to obtain a signing result, and send the signing result;
a client, wherein the client is located in the network coverage area of the secure device, and is configured to: obtain service information in response to a service operation of a user, and establish or maintain a connection to the secure device; send the service information to the secure device as the raw data; receive the signing result from the secure device; and send the signing result; and
a server, wherein the server is configured to: receive the signing result from the client, perform signature verification on the signing result by using a public key of the secure device to obtain a signature verification result, and perform a service based on the service information when the signature verification result is that the signature verification succeeds.

13. The wireless signal-based identity verification system in a secure environment according to claim 12, wherein establishing or maintaining the connection to the secure device comprises: pre-submitting the service information to query, from a service server, whether identity verification needs to be performed; and establishing or maintaining a connection to the secure device when a query result is that the identity verification needs to be performed.

14. The wireless signal-based identity verification system in a secure environment according to claim 12, wherein the client comprises a service front-end and an identity verification SDK;
obtaining the service information comprises: obtaining the service information by using the service front-end;
establishing or maintaining the connection to the secure device comprises: invoking the identity verification SDK by using the service front-end, and establishing or maintaining a connection to the secure device by using the identity verification SDK;
sending the service information to the secure device as the raw data comprises: sending the service information to the secure device as the raw data by using the identity verification SDK;
sending the signing result comprises: sending the signing result by using the identity verification SDK; and
obtaining the signature verification result comprises: receiving the signature verification result by using the identity verification SDK, and receiving, by using the service front-end, the signature verification result notified by the identity verification SDK through a callback.

15. The wireless signal-based identity verification system in a secure environment according to claim 12, wherein the client is further configured to: receive the signature verification result, and submit the service information when the received signature verification result is that the signature verification succeeds; and
the server comprises:
an identity verification server, wherein the identity verification server is configured to: receive the signing result from the client, perform the signature verification on the signing result by using the public key of the secure device to obtain the signature verification result, and send the signature verification result to the client; and
a service server, wherein the service server is configured to: receive the service information submitted by the client, and perform the service based on the service information.

16. The wireless signal-based identity verification system in a secure environment according to claim 15, wherein the signature verification result comprises whether the signature verification succeeds and an identity verification number;
receiving the service information submitted by the client, and performing the service based on the service information comprises: receiving the service information and the identity verification number, invoking the identity verification server, receiving a secondary confirmation result from the identity verification server, and performing the service based on the service information when the secondary confirmation result is that the signature verification succeeds; and
the identity verification server is further configured to perform, by using the identity verification number, secondary confirmation on whether the signature verification succeeds to obtain the secondary confirmation result.

17. The wireless signal-based identity verification system in a secure environment according to claim 12, wherein the secure device is further configured to: before receiving the raw data from the client, in response to an activation operation of the user, store the private key of the secure device by using the secure storage environment, and enable the server to store the public key of the secure device.

18. The wireless signal-based identity verification system in a secure environment according to claim 12, further comprising a certificate provider, wherein
the certificate provider is configured to: generate the private key and the public key of the secure device, and create a certificate of the secure device based on the public key of the secure device; and
the secure device is configured to: request the server to activate the device in response to the activation operation of the user, so that the server determines whether the secure device is activated, requests the certificate provider to issue the certificate of the secure device when the secure device is not activated, receives the private key, the public key, and the certificate of the secure device from the certificate provider, and stores the public key of the secure device; and receive the private key and the certificate of the secure device that are sent by the server; or
the certificate provider is configured to create a certificate of the secure device based on the public key of the secure device; and
the secure device is configured to: generate the private key and the public key of the secure device in response to the activation operation of the user; request the server to activate the device, so that the server determines whether the secure device is activated, and when the secure device is not activated, requests the certificate provider to issue the certificate of the secure device and send the public key of the secure device, receives the certificate of the secure device from the certificate provider, and stores the public key of the secure device; and receive the certificate of the secure device that is sent by the server.

19. A computer-readable storage medium, wherein the computer-readable storage medium stores a computer program, and when the computer program is executed in a computer, the computer is enabled to serve as a client to perform the method according to any one of claims 1 to 11.

20. A computing device, comprising a memory and a processor, wherein the memory stores executable code, and the processor executes the executable code to perform the method according to any one of claims 1 to 11.
